# EUROPEAN PATENT SPECIFICATION

(11) **EP 1 366 934 B1**
(45) Date of publication and mention of the grant of the patent: **18.04.2007**
(21) Application number: 03076623.2
(22) Date of filing: 27.05.2003
(51) Int. Cl.: B60G 21/05, A61G 5/04, B60G 9/00

(54) **Wheel suspension for a motorized vehicle for disabled persons**
Radaufhängung für ein motorisiertes Behindertenfahrzeug
Suspension de roue pour un véhicule motorisé pour personne handicapée

(30) Priority: 29.05.2002 NL 1020705
(43) Date of publication of application: 03.12.2003
(73) Proprietor: Vimili Holding B.V., 1272 Ec Huizen (NL)
(72) Inventor: Dudok van Heel, Frederik Carl Frithjof, 1411 JW Naarden (NL)
(74) Representative: Prins, Adrianus Willem

(56) References cited:
- EP-A- 0 586 785
- WO-A-94/15567
- FR-A- 2 782 678
- NL-C- 1 018 489
- US-A- 3 332 701
- US-A- 3 547 215
- US-A- 5 380 036
- US-A- 5 772 237
- US-A- 5 921 338
- US-A- 6 070 898
- US-B1- 6 206 119

## Description

The invention relates to a motorized vehicle for disabled persons, hereinafter called scoot-mobile. More in particular, the invention relates to a wheel suspension of such a scoot-mobile.

Scoot-mobiles are intended to help people who, for instance due to illness or old age, have a reduced mobility, to move about in and, in particular, outside the house over relatively large distances. As a rule, the scoot-mobile comprises three wheels, two driven rear wheels and one steerable front wheel. The rear wheels are driven by a motor, in particular an electromotor, via a differential gear and two wheel axles. Together, these driving means form one rigid rear axle construction, with which the rear wheels are suspended from an undercarriage of the scoot-mobile.

With known scoot-mobiles, this suspension is unsprung or sprung such that the rigid axle construction can only move up and downwards, while the axle construction always maintains a substantially horizontal position. Although this known suspension is generally deemed favorable to the road holding and stability of the scoot-mobile in bends, this suspension offers little driving comfort, particularly on bumpy roads. When one of the rear wheels encounters an unevenness, first, the other rear wheel will loose contact with the underground so that driving energy will be lost, since, for as long as this wheel dangles in the air, the other wheel will stand still as a result of the operation of the differential gear. Then, under the influence of gravity, the wheel will regain contact with the road surface. The scoot-mobile will then lean over in the direction of the lowest wheel. As a result, the scoot-mobile can loose balance and fall over, particularly when the unevenness is large and the driver has not seen the unevenness coming and, therefore, will not have been able to compensate this unbalance by an anticipating move of his body weight.

From US 5,772,237 a powered wheelchair is known, having a rigid axle construction that is suspended to an undercarriage of the wheelchair by means of arms, extending at opposite sides of the axle construction. Each arm is with a first end pivotally connected to the axle and with its other end pivotally connected to the under carriage by means of universal bearings. Spring means are provided in the form of a pair of fluid pressure cylinders, mounted between the undercarriage and about halfway the arms.

With this known suspension, the rigid axle construction is suspended from the undercarriage in a spring-mounted manner such that the driven wheels can move up and downwards substantially independently of each other.

The spring means allow rotation of the axle construction about a rotation axis extending substantially parallel to the road surface, at right angles to a longitudinal axis of the axle construction. Due to this freedom of rotation, the axle construction can always adopt the position in which both wheels contact the road surface. The undercarriage can then maintain a substantially horizontal position, as a result of which a driver seated on this undercarriage will experience virtually no hinder from the unevenness. As a result, irrespective of the road surface, this known wheelchair always has a stable, comfortable road holding and no driving energy will be lost through wheels losing contact with the road surface.

With such a suspension, the rigid axle construction can pivot by the arms over a relatively large stroke, so that relatively large unevennesses can be compensated. The rigid axle construction can, on the one side, with a simultaneous pivoting movement of the arms, move up and down in a substantially horizontal position and the rigid axle construction can, on the other side, with arms pivoting independently of each other, rotate about a rotation axis extending substantially parallel to the road surface, at right angles to a longitudinal axis of the axle construction.

From US 3,332,701 a suspension is known for a rigid axle construction of an automotive vehicle. The suspension comprises two arms, which each are connected to the rigid axle about halfway their length by means of a rubber-bushed pin. Each arm is furthermore connected to the vehicle frame, near its ends and about halfway its length, respectively via a rubber-bushed pin, an air spring and a shock absorber. The shock dampers and air springs act as spring means, with the abovementioned advantages, but take up a considerable amount of space between the arms and the frame.

US 5,380,036 discloses a suspension for a rigid rear axle of a vehicle, comprising two arms which with a first end are connected to the rear axle by means of two rubber spring elements and near their second ends are pivotally connected to a vehicle frame. The rear axle is not driven and does not belong to a soot-mobile.

The invention contemplates providing a scoot-mobile with an improved wheel suspension. To that end, the scoot-mobile according to the invention is characterized by the features of claim 1.

By connecting the arms to the rear axle via first spring means and/or to the undercarriage by means of second spring means, changes in the mutual position of the arms and the axle construction, can be compensated at the location of their points of attachment, so that through the referred to rotational movement no undesired bending stress and torsional stress can be introduced in the axle construction.

In principle, both movements (the up and downwards movement and the rotational movement) are independent of each other, but, in practice, will often occur in combination. The single up and downwards movement is of advantage particularly when the scoot-mobile drives over unevennesses extending substantially over the full width of the axle construction, such as, for instance, a speed ramp or a curb. Due to this movement, when driving over the unevennesses, the axle construction can bounce upwards so that the wheels may follow the unevenness, without the remaining part of the scoot-mobile, in particular the undercarriage with the driver, raising appreciably. As a result, a driver will experience hardly any nuisance from the unevenness. As already indicated hereinabove, the rotating movement offers relief particularly when both driven wheels are exposed to different unevennesses. In that case, the rigid axle construction can each time adopt the position necessary for keeping both wheels continuously on the ground. The independently moving pivot arms then enable a relatively large skewness of the axle construction, and the first spring means offer the freedom of movement required to that end in the points of attachment of the axle construction to the arms.

In an advantageous embodiment, a scoot-mobile according to the invention is characterized by the features of claim 2.

When negotiating a bend, a centrifugal force will act on the center of gravity of the scoot-mobile with driver, which force will have the scoot-mobile tilt over in the bend. As a suspension according to the invention allows the rigid axle construction to rotate relative to the undercarriage, conversely, it will also allow the undercarriage to tilt relative to the rigid axle construction extending substantially horizontally in the bend. When the angle of inclination becomes too large, this tilting may lead to an instable condition as a result of which the scoot-mobile may fall over.

With a suspension according to the invention, this problem is solved by using non-linear spring means, with a spring rigidity which increases according as the deformation increases. Such spring means ensure an effective limitation of the maximum angle of inclination of the undercarriage, as, at a particular angle of inclination, the forces acting on the scoot-mobile when negotiating a bend are not sufficiently large for further deforming the spring means.

In this manner, an optimal balance can be realized between a wheel suspension which, on the one side, is sufficiently slack to be able to bounce comfortably along with uneven undergrounds and, on the other side, is sufficiently rigid to guarantee a stable road holding in the bends, while the maximum angle of inclination is limited.

Preferably, the spring characteristic of the spring means is selected such that in a bend, with a given maximum speed of the scoot-mobile, the scoot-mobile can tilt at most approximately 7° and preferably at most approximately 4°. Such maximum angles of inclination will give the driver a sense of safety and reduce the risk of falling over to a minimum.

In addition to or instead of non-linear spring means, the suspension can be provided with one or more stops, limiting the maximum angle of rotation of the rear axle relative to the undercarriage (and hence the maximum angle of inclination of the undercarriage in a bend). Use of both non-linear spring means and one or more stops offers the advantage that the non-linear spring means can gradually check the tilting movement so that an abrupt stop is prevented.

In a further elaboration, a scoot-mobile according to the invention is characterized by the features of claim 4.

Preferably, the first spring means are designed as two spring-mounted elements, between which an arm can be connected to the axle construction or, conversely, the axle construction can be connected to an arm. These spring-mounted elements can, for instance, have the shape of two cushions, manufactured from a resilient material, for instance rubber. Such spring-mounted elements are robust and simple to manufacture, while spring properties such as rigidity and damping can be varied in a simple manner, for instance by manufacturing the elements from a different material or by slightly changing the geometry of the cushions. Thus, by exchanging different springing elements, each time, a wheel suspension can be realized which is optimally geared to, inter alia, the individual needs and the physical condition of a driver, as well as the specific possibilities of the scoot-mobile.

In a further advantageous embodiment, a scoot-mobile according to the invention is characterized by the features of claim 11.

By using a cross stabilizing rod, sideways forces can be compensated and slanting of the arms and the rigid axle construction relative to the undercarriage can be prevented. To that end, the cross stabilizing rod is connected by a first end to the frame and by a second end, extending substantially at right angles to the first end, to one of the arms.

In the further subclaims, further advantageous embodiments of a scoot-mobile according to the invention are described.

In clarification of the invention, an exemplary embodiment of a scoot-mobile with a wheel suspension according to the invention will be described with reference to the drawing. In the drawing:
Fig. 1 shows, in perspective view, a scoot-mobile;
Fig. 2 shows, in side view, a scoot-mobile according to the invention with rear wheels suspended from the undercarriage in a spring-mounted manner;
Fig. 3 shows, in top plan view, the spring-mounted suspension of the rear wheels of Fig. 2;
Fig. 4 shows, in rear view, the spring-mounted suspension of the rear wheels of Figs. 2 and 3;
Fig. 5 shows a detail of the suspension of the rear wheels in the undercarriage;
Fig. 6 shows, in schematic side view, comparable to Fig. 2, an alternative embodiment of a scoot-mobile;
Fig. 7 shows, in cross-sectional view along the line VII-VII in Fig. 6 two spring means; and
Fig. 8 shows, in cross section along the line VIII-VIII in Fig. 7, the second spring means for a scoot-mobile according to Fig. 6.

In this description, identical or corresponding parts have identical or corresponding reference numerals.

Herein, a scoot-mobile is at least understood to include a motorized three or four wheeler, intended for moving persons who, due to old age or illness, walk with difficulty, but who can and want to participate in traffic. As a rule, the range of such scoot-mobiles is between approximately 20 and 80 kilometers at a maximum speed which can increase from approximately 5 to 18 km/h. The values mentioned are of an illustrative nature and therefore should not be taken as being limitative in any way.

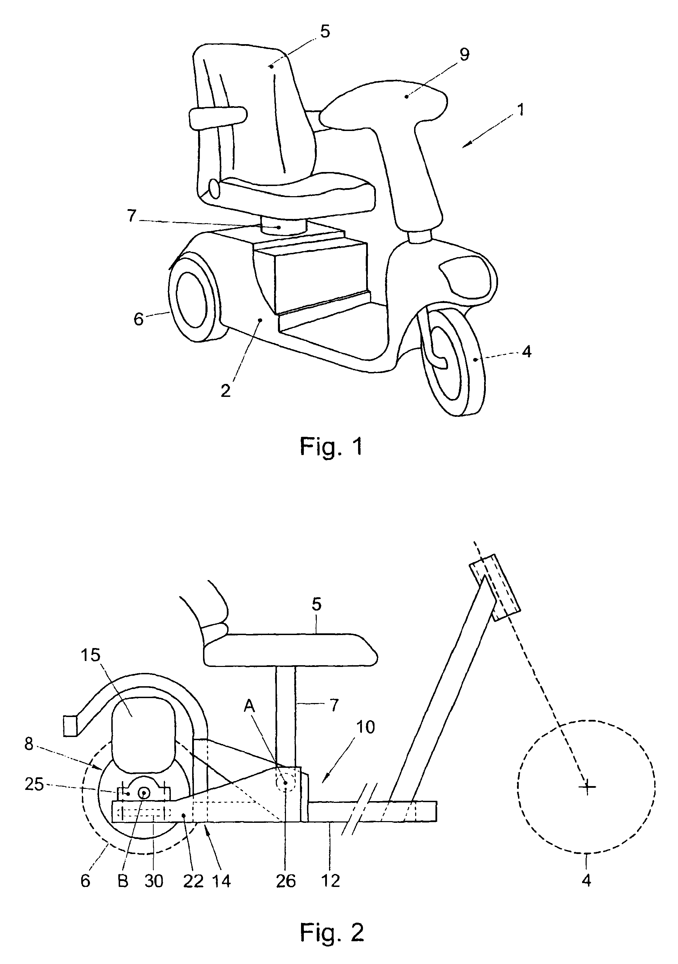

The scoot-mobile of Fig. 1 indicated by reference numeral 1 comprises an undercarriage 2 with suspended therein a front wheel 4, two rear wheels 6 and a driving device 8 for driving the rear wheels 6. The scoot-mobile 1 further comprises a seat 5 which, via a seat column 7 is connected rigidly or in a spring-mounted manner to the undercarriage 2, and a steering 9 for steering the front wheel 4. As the invention relates in particular to the undercarriage 2 and the manner in which the wheels 4, 6 are suspended therein, in the following description no further attention will be paid to possible embodiments of the seat, the driving device and further accessories. Suffice it to say that all conceivable embodiments within the framework of the invention can be combined with an undercarriage 2 to be discussed hereinafter.

The undercarriage 2 comprises a frame 10 built up from at least two longitudinal profiles 12 and at least two transverse profiles 14 extending therebetween.

The driving device 8 comprises a motor 15, in particular an electromotor, which, via a differential gear 16 and two wheel axles 18, drives the rear wheels 6. Further, a supply source is provided, in particular a storage battery and brake means (not shown). The motor 15, differential gear 16 and wheel axles 18 together form a rigid entity, indicated hereinbelow as rigid axle construction 20. This rigid axle construction 20 is suspended from the frame 10 in a spring-mounted manner via two arms 22 extending substantially at right angles to the axle construction 20. By a first end, in a manner to be described further, these arms 22 are connected to the axle construction 20 in a spring-mounted manner, with the aid of first spring means 24, and, by a second end, connected to the frame 10 in a spring-mounted manner, with the aid of second spring means 26.

In the embodiment shown, the second spring means 26 comprise two torsion springs, extending, with a torsion axis A in line with each other, substantially parallel to a longitudinal axis B of the rigid axle construction 20. As torsion springs, for instance torsion springs of the brand Rosta, type DR-S can be used. This type of torsion spring is built up from two square sleeves telescoped into each other while, in an unloaded condition, the mutual orientation of the cross sections is rotated over 45°, so that the diagonals of the cross section of the inner shaft are located substantially at right angles to the straight sides of the outer shaft. The triangular spaces between the inner and outer shafts are filled with an elastic material. In use, both sleeves can rotate relative to each other, while the elastic material provides the necessary elasticity and damping. It is noted that this is only one possible embodiment of a torsion bar. Many other embodiments are possible within the framework of the invention. Also, instead of torsion springs, for instance screw springs can be used. Therefore, the exemplary embodiment described should not be taken as being limitative in any way.

In principle, the arms 22 can pivot about axis A independently of each other. The position of the rigid axle construction extending between the arms 22 will then change constantly. The freedom of movement required thereto in the attachment points between the axle construction 20 and the arms 22 is provided, in a suspension according to the invention, by interconnecting the axle construction 20 and the arms 22 in a spring-mounted manner by means of the first spring means 24.

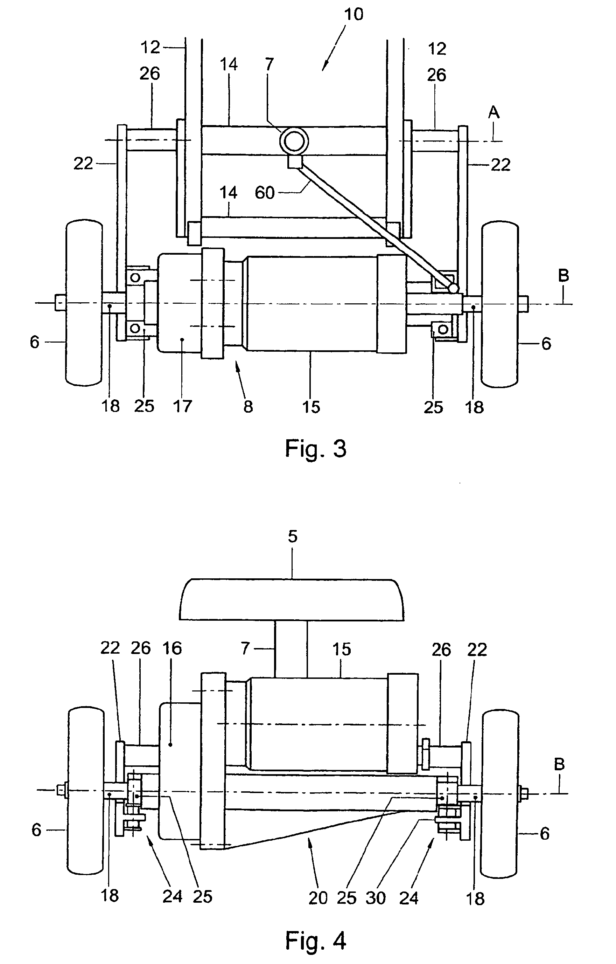

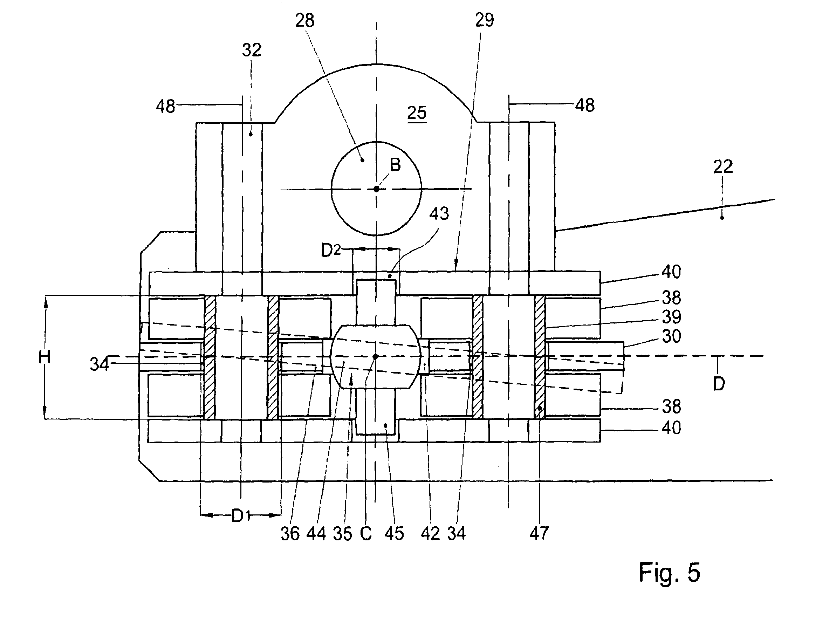

Fig. 5 shows the spring-mounted connection between the axle construction 20 and the arms 22 in further detail. Adjacent each rear wheel 6, the axle construction 20 is provided with a suspension block 25 (see Figs. 3 and 4). These suspension blocks 25 are fixedly connected to a stationary part of the axle construction 20 and are each equipped with a central through-bore 28 for passage of the wheel axles 18. The suspension blocks 25 are provided with a flat bottom side 29 and two fastening holes 32 extending at right angles to this flat bottom side 29, on both sides of the central through bore 28.

The arms 22 each comprise a fastening flange 30, extending substantially at right angles to the plane of the arm 22 and, like the suspension block 25, provided with two fastening holes 34. The first spring means 24 comprise, per arm 22, two resilient elements 38 which extend on both sides of the fastening flange 30 and which are clamped against a bottom and top side of the fastening flange 30 by two substantially rectangular clamping plates 40. The arrangement is fixed against the bottom side 29 of the suspension block 25 with the aid of suitable fastening means, for instance bolts 48 indicated by dash-dotted lines. To that end, both the resilient elements 38 and the clamping plates 40 are provided with suitable fastening holes 39,41.

Due to the spring-mounted connection, during use, the suspension block 25 and the fastening flange 30 can rotate relative to each other, at least about an axis C extending substantially parallel to the longitudinal axis B of the rigid axle construction 20. This situation is represented in Fig. 5 in broken lines. Further, the suspension block 25 and the fastening flange 30 can pivot relative to each other about an axis D extending horizontally, substantially at right angles to the above-mentioned axis.

In order to allow the above-mentioned rotating movements of the fastening flange 30, the diameter D1 of the fastening holes 34 of the fastening flange 30 should be greater than a diameter of the fastening means 48 extending through these fastening holes 34. The maximum rotational movement of the fastening flange 30 can be limited in at least two manners: in that the fastening flange 30 contacts the clamping plates 40 or in that by a circumferential edge, the fastening holes 34 contact fastening means 48 extending through these holes 34. As in the second manner of limitation the fastening means 48 will be unfavorably loaded (that is, by shearing) the first manner of limitation is preferred. Therefore, the different parts of the connection are preferably designed and dimensioned such that the clamping plates 40 can serve as limiting stop.

The wide diameter D1 of the fastening holes 34 entails that in horizontal direction, at least in a plane at right angles to the central axis of the fastening holes 34, the fastening flange 30 has sufficient freedom of movement. In order to limit this freedom of movement, without thereby affecting the freedom of rotation of the fastening flange 30, the fastening flange 30 and the clamping plates are intercoupled with the aid of a ball hinge 35, as shown in Fig. 5.

To that end, the fastening flange 30, the spring means 38 and the clamping plates 40 are all provided with a third hole, located centrally between earlier-mentioned fastening holes. The ball hinge 35 comprises an annular casing 42, fittingly confined within the third hole 36 of the fastening flange 30. The casing 42 has a concave inner circumference, within which a ball-shaped body 44 is included so as to be freely rotatable. The ball-shaped body 44 is provided with a central axis 45, the ends of which extend on both sides of the fastening flange 30, through the spring means 38 as far as into the third holes 43 of the clamping plates 40. The diameters D2 of the third holes 43 of the clamping plates 40 are dimensioned such that they confine the axle ends 45 in radial direction.

Thus, the axle 45 prevents the clamping plates 40 and the fastening flange 30 from sliding parallel to each other (or, viewed from the axle 45, in radial direction). Movements in axial direction do remain possible, either in that the axle ends 45 can move in axial direction in the holes 43, or in that the ball-shaped body 44 can move along the axle 45. The fastening flange 30 too retains its freedom of rotation in that upon rotation of the flange 30, the casing 42 can rotate relative to the ball body 44. As a result, the first spring means 38 between the fastening flange 30 and the clamping plates 40 are principally pressure loaded and not or hardly shearing-loaded.

Further, between the clamping plates 40, preferably two distance sleeves 47 are provided. In the example shown, these extend through the fastening holes 34, 39 of the fastening flange 30 and the spring means 38, respectively, and, by their end face, abut against the clamping plates 40. Due to such distance sleeves 47, between the clamping plates 40 a particular, desired distance H can be maintained, which distance is preferably somewhat smaller than the unloaded thickness of the spring means 38 and the fastening flange 30 together. As a result, when tightening the fastening means, the spring means 38 will be slightly biased, which is favorable to the stability of the suspension.

In the exemplary embodiment, the first spring means 24 are designed as two substantially rectangular cushions, manufactured from a resilient material, for instance rubber. Depending on, for instance, the physical properties and the manner of driving of the intended user as well as the type of scoot-mobile, the spring characteristic of these spring means 24 can be adapted in order to obtain a stiffer or, conversely, more supple suspension. For instance, the geometry of the spring means 24 and the dimensions thereof can be adapted, in the resilient layers 38 weakening holes can be provided, several layers of resilient material can be stacked on top of each other and the spring means can be manufactured from a different material, for instance of a different hardness. Preferably, this hardness is in the range of approximately 50 and 70° Shore.

Preferably, the spring means 24 have a non-linear spring characteristic, with a spring rigidity which increases according as the deformation increases as is the case with the second spring means 26. Furthermore, the spring means 24, 26 are preferably provided with damping, so that during use, vibrations induced in the suspension will be damped in a few strokes.

As, due to the second spring means 26, a slanting movement of the arms 22 is not completely precluded, a cross stabilizing rod 60 is provided. It has a straight or hooked form and, by a first end, is connected to the frame 10, adjacent the pivotal axis A of the arms 22, and, by a second end, connected to one of the arms 22, adjacent the rear wheels 6. The connections are then designed to be pivotable such that the cross stabilizing rod 10 does not prevent the arms 22 from making a pivotal movement about the torsion springs 26, but that it does prevent them from slanting. Naturally, many other embodiments of cross stabilizing rods are possible.

With a suspension as described hereinabove, rear wheels 6 connected to the rear axle construction 20 can, to a large extent, move upwards and downwards independently of each other, which is particularly favorable when both wheels 6 are exposed to various unevennesses in the road surface. As a result, each time, the wheels 6 can compress independently of each other and still retain contact with the road surface, while the undercarriage maintains a substantially horizontal position. Thus, the suspension contributes to a stable and comfortable road holding, while the scoot-mobile and the driver maintain a substantially vertical position.

Further, despite the spring-mounted suspension, the scoot-mobile has a safe, stable road holding when negotiating bends, in particular in that spring means with a progressively increasing spring rigidity are used and in that the clamping plates can serve as stops, for flexibly limiting the maximal angular deflection of the rear axle construction about the horizontal axes. Due to these features, the scoot-mobile is prevented from tilting over too far in bends, as a consequence of which the scoot-mobile could get out of balance. Preferably, the spring characteristic and/or the stop are selected such that the angle of inclination mentioned, during use, can be, at most, 5 to 7°.

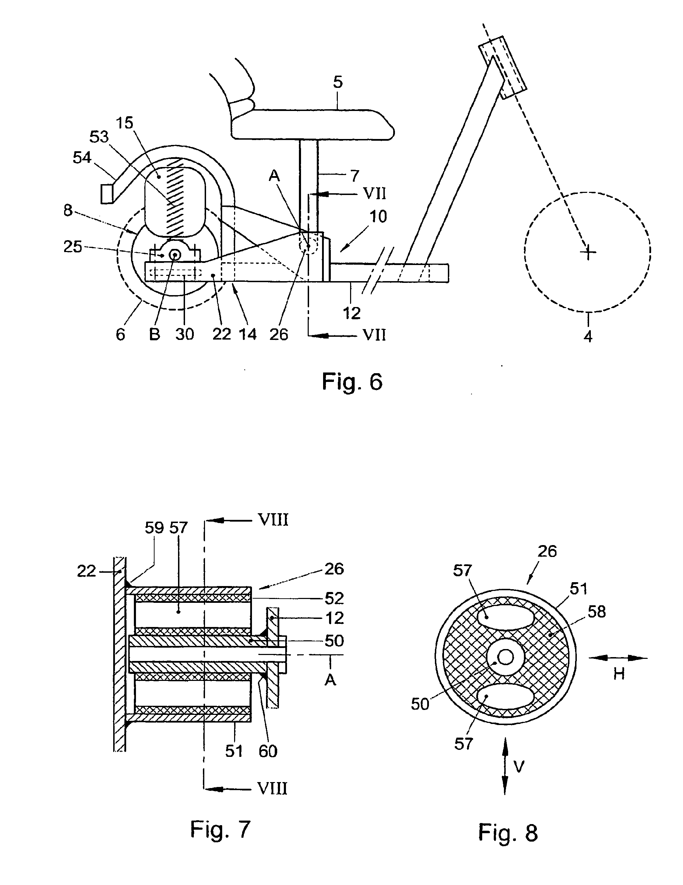

In Fig. 6, an alternative embodiment of a scoot-mobile according to the invention is shown, in a view comparable to Fig. 2. The same or corresponding parts have the same or corresponding reference numerals.

In this embodiment, at the location of the suspension blocks 25, the arms 22 are rigidly connected to the axle construction 20 and, instead of the first spring means 24, third spring means 53 are provided, extending on both sides of the axle construction, substantially vertically between the arms 22 and a frame part 54 above the rear wheels 6, preferably straight above the axle B. The third spring means 53 can, for instance, be designed as a compression spring and can compensate virtually all vertical forces occurring on the rear wheels 6 and the arms 22. In this embodiment, the second spring means 26 are designed, for instance, as schematically represented in Figs. 7 and 8.

Here, the second spring means 26 comprise an outer bushing 51, fixed on the arm 22, for instance by welds 59. This outer bushing 51 has a relatively great cross section, for instance more than 50 mm. Arranged concentrically therewith, an inner bushing 50 is provided with a relatively small outside cross section, for instance less than 30 mm, the inner bushing 50 can, for instance, have an outside diameter of 15 to 16 mm, the outer bushing 51 and inside cross section of, for instance, approximately 100 mm. These values are only shown by way of illustration and should not be taken as being limitative in any way. At the side remote from the arm 22, the inner bushing 50 is fixed against the frame part 12, for instance by welds 60. Naturally, the inside bushing 50 can also be designed as a solid axle.

Between the inner bushing 50 and the outer bushing 51, a rubber, elastic body 52 is provided, for instance a substantially cylindrical body made of rubber or elastic plastic, which is fittingly included between the surfaces of the inner bushing 50 and the outer bushing 51 facing each other. The body 52 is designed to be substantially solid and is provided above and below the inner bushing 50 with a recess 57 extending in axial direction, with a substantially elliptical cross section (see Fig. 8), which recess 57 is flanked, on both sides, with a remaining back 58.

For this embodiment of the second spring means 26 it holds that its rigidity in vertical direction V will be considerably smaller than the spring rigidity in horizontal direction. As a result, the inner bushing 50 can move up and down within the outer bushing 51 over a particular vertical distance, which distance is *inter alia* determined by the dimensions of the elliptical recess 57. The earlier described cross stabilizing rod 60 prevents the outer bushing 51 (and therefore the arm 22) from sliding in axial direction relative to the inner bushing 50.

In this variant embodiment, all spring forces are substantially compensated by the third spring means 53. Independent up and downward movement of the rear wheels 6 remains possible due to the second spring means 26, which allow the rigid axle construction 20 and the arms 22 to tilt, to a limited extent, relative to the frame. Hence, the second spring means 26 in fact take over the function of the first spring means 24 in the first embodiment.

The embodiment shown offers the advantage that accelerating and decelerating forces are rapidly absorbed by the body 52, in particular the solid parts 58 extending in front of and behind the axle 55. In addition, this embodiment can simply be used in already existing scoot-mobiles, with a rear axle construction 20 which is rigidly connected to the arms 22. With the aid of the second and third spring means 53, 26 according to Figs. 6 - 8, such existing scoot-mobiles can simply be adapted for realizing a suspension according to the invention, while the rear wheels 6 can move up and downwards independently of each other.

The invention is not limited in any way to the exemplary embodiments represented in the description and the drawing. Many variations thereon are possible within the framework of the invention as outlined by the claims.

For instance, the first spring means can be designed in many different manners, for instance as air cushions, as hybrid spring means, provided with one or more liquid-filled, in particular oil-filled chambers, as spring leafs or as one or more spiral springs positioned next to each other. Also, on both sides of the fastening flange, different spring means can be used, with different spring rigidities.

Further, the front wheel of the scoot-mobile can be pivotally connected to the frame via one or two arms, in a corresponding manner to the rear wheels. A first end of the or each arm can then be connected via a torsion spring to the frame and the other end can be connected to a stationary part of the front axle either rigidly or via similar first spring means.

These and many variations are understood to fall within the framework of the invention as outlined by the following claims.

## Claims

1. A scoot-mobile (1) comprising an undercarriage (2) provided with a frame (10) and at least three wheels (4, 6), two of which are driven by a driving device (8), the driving device (8) and the driven wheels (6) together forming a rigid axle construction (20) which is suspended from the frame (10) in a spring-mounted manner, by means of two arms (22) each of which being connected adjacent a first end to the rigid axle construction (20), and, adjacent a second end to the frame (10), such that both wheels (6) can move up and downwards substantially independently of each other, **characterised in that** the first ends are connected to the axle construction (20) in a spring-mounted manner via first spring means (24) and/or the second ends are connected to the frame (10) in a spring-mounted manner via second spring means (26).

2. A scoot-mobile (1) according to claim 1, wherein at least the first spring means (24) have a non-linear spring characteristic, while the spring constant increases with increasing deformation.

3. A scoot-mobile(1) according to claim 1 or 2, wherein the first spring means (24) are oriented such that a spring force provided by these springs extends in a substantially vertical direction, at least in a normal condition of use of the scoot-mobile (1).

4. A scoot-mobile (1) according to any one of the preceding claims, wherein the first spring means (24) comprise two resilient elements (38) and wherein the arm (22) or the axle construction (20) is connected to the axle construction (20) or the arm (22), respectively, between these two resilient elements (38) by a fastening flange (30) provided to that end.

5. A scoot-mobile (1) according to any one of the preceding claims, wherein the first spring means (24) comprise cushion shaped elements (38).

6. A scoot-mobile (1) according to any one of the preceding claims, wherein the first spring means (24) are manufactured from rubber.

7. A scoot-mobile (1) according to claim 6, wherein the rubber has a hardness which is preferably between approximately 50 and 70° Shore.

8. A scoot-mobile (1) according to any one of the preceding claims, wherein at least the first spring means (24) are biased.

9. A scoot-mobile (1) according to any one of the preceding claims, wherein the second spring means (26) comprise two torsion springs, which are connected to the arms (22) by a first end, and to the frame (10) by a second end, while one torsion axle of these torsion springs extends substantially horizontally, substantially parallel to a longitudinal axis of the rigid axle construction (20).

10. A scoot-mobile (1) according to claim 9, wherein between the frame (10) and one of the arms (22) a cross stabilizing rod (60) is provided to prevent the rigid axle construction (20) from slanting relative to the frame (10).

11. A scoot-mobile (1) according to any one of the preceding claims, wherein the suspension comprises at least one stop, for limiting the maximum freedom of movement of the rigid axle construction (20), in particular the maximum angular deflection of the axle construction (20) about a horizontal axis extending at right angles to a longitudinal axis of the axle construction (20).

12. A scoot-mobile (1) according to claim 11, wherein said angular deflection is at least smaller than 7° and preferably smaller than approximately 5°.

13. A scoot-mobile (1) according to any one of the preceding claims, wherein the first and/or second spring means (24, 26) comprise damping.

14. A scoot-mobile(1) according to any one of the preceding claims, wherein the driven wheels are the rear wheels (6).

## Patentansprüche

1. Rollerfahrzeug (1) mit einem Fahrgestell (2), das einen Rahmen (10) und mindestens drei Räder (4,6) aufweist, von denen zwei mittels einer Antriebseinheit (8) angetrieben sind, wobei die Antriebseinheit (8) und die angetriebenen Räder (6) zusammen eine starre Achsenkonstruktioh (20) bilden, die an dem Rahmen (10) mittels zweier Arme (22) abgefedert aufgehängt ist, von denen jeder nahe einem ersten Ende mit der starren Achsenkonstruktion (20) verbunden ist und nahe einem zweiten Ende mit dem Rahmen (10) verbunden ist, derart, dass beide Räder sich im Wesentlichen unabhängig voneinander auf- und abbewegen können,
**dadurch gekennzeichnet, dass** die ersten Enden über erste Federvorrichtungen (24) abgefedert mit der Achsenkonstruktion (20) verbunden sind und/oder die zweiten Enden über zweite Federvorrichtungen (26) abgefedert mit dem Rahmen (10) verbunden sind.

2. Rollerfahrzeug (1) nach Anspruch 1, bei dem mindestens die ersten Federvorrichtungen (24) eine nichtlineare Federcharakteristik haben, wobei sich die Federkonstante mit zunehmender Verformung vergrößert.

3. Rollerfahrzeug (1) nach Anspruch 1 oder 2, bei dem die ersten Federvorrichtungen (24) derart ausgerichtet sind, dass eine von diesen Federn erzeugte Federkraft zumindest im normalen Betriebszustand des Rollerfahrzeug (1) in einer im Wesentlichen vertikalen Richtung verläuft.

4. Rollerfahrzeug (1) nach einem der vorhergehenden Ansprüche, bei dem die ersten Federvorrichtungen (24) zwei elastische Elemente (38) aufweisen und bei dem der Arm (22) oder die Achsenkonstruktion (20) zwischen diesen beiden elastischen Elementen (38) durch einen zu diesem Zweck vorgesehenen Befestigungsflansch (30) mit der Achsenkonstruktion (20) bzw. dem Arm (22) verbunden ist.

5. Rollerfahrzeug (1) nach einem der vorhergehenden Ansprüche, bei dem die ersten Federvorrichtungen (24) kissenförmige Elemente (38) aufweisen.

6. Rollerfahrzeug (1) nach einem der vorhergehenden Ansprüche, bei dem die ersten Federvorrichtungen (24) Gummi aufweisen.

7. Rollerfahrzeug (1) nach Anspruch 6, bei dem das Gummi eine Härte von vorzugsweise ungefähr 50 bis 70° Shore hat.

8. Rollerfahrzeug (1) nach einem der vorhergehenden Ansprüche, bei dem die ersten Federvorrichtungen (24) vorgespannt sind.

9. Rollerfahrzeug (1) nach einem der vorhergehenden Ansprüche, bei dem die zweiten Federvorrichtungen (26) zwei Torsionsfedern aufweisen, die an einem ersten Ende mit den Armen (22) verbunden sind und an einem zweiten Ende mit dem Rahmen (10) verbunden sind, wobei eine Torsionsachse dieser Torsionsfedern im Wesentlichen horizontal und im Wesentlichen parallel zu der Längsachse der starren Achsenkonstruktion (20) verläuft.

10. Rollerfahrzeug (1) nach Anspruch 9, bei dem zwischen dem Rahmen (10) und einem der Arme (22) eine Querstabilisierungsstange (60) vorgesehen ist, um ein Ausschrägen der starren Achsenkonstruktion (20) relativ zu dem Rahmen (10) zu verhindern.

11. Rollerfahrzeug (1) nach einem der vorhergehenden Ansprüche, bei dem die Aufhängung mit mindestens einem Anschlag versehen ist, um die maximale Bewegungsfreiheit der starren Achsenkonstruktion (20), insbesondere die maximale Winkelablenkung der Achsenkonstruktion (20) um eine rechtwinklig zur Längsachse der Achsenkonstruktion (20 verlaufende horizontale Achse zu beschränken.

12. Rollerfahrzeug (1) nach Anspruch 11, bei dem die Winkelablenkung mindestens kleiner als 7° und vorzugsweise kleiner als näherungsweise 5° ist.

13. Rollerfahrzeug (1) nach einem der vorhergehenden Ansprüche, bei dem die ersten und/oder zweiten Federvorrichtungen (24,26) eine Dämpfung aufweisen.

14. Rollerfahrzeug (1) nach einem der vorhergehenden Ansprüche, bei dem die angetriebenen Räder die Hinterräder (6) sind.

## Revendications

1. Fauteuil roulant (1) comprenant un train roulant (2) pourvu d'un châssis (10) et au moins trois roues (4, 6) dont deux sont entraînées par un dispositif d'entraînement (8), le dispositif d'entraînement (8) et les roues motrices (6) formant ensemble une construction d'essieu (20) rigide suspendue par le châssis (10) de façon montée sur ressort, au moyen de deux bras (22) donc chacun est relié au niveau du côté d'une première extrémité à la construction d'essieu (20) rigide et au niveau du côté d'une seconde extrémité au châssis (10), de sorte que les deux roues (6) peuvent se déplacer vers le haut et vers le bas essentiellement indépendamment l'une de l'autre, **caractérisé en ce que** les premières extrémités sont reliées à la construction d'essieu (20) de façon montée sur ressort via les premiers moyens de ressort (24) et/ou les secondes extrémités sont reliées au châssis (10) de façon montée sur ressort via les seconds moyens de ressort (26).

2. Fauteuil roulant (1) selon la revendication 1, dans lequel au moins les premiers moyens de ressort (24) ont une courbe caractéristique de ressort non linéaire tandis que la constante du ressort augmente à mesure que la déformation augmente.

3. Fauteuil roulant (1) selon la revendication 1 ou 2, dans lequel les premiers moyens de ressort (24) sont orientés de façon à ce que la force de ressort fournie par ces ressorts s'étende dans une direction essentiellement verticale, au moins dans un état normal d'utilisation du fauteuil roulant (1).

4. Fauteuil roulant (1) selon l'une quelconque des revendications précédentes, dans lequel les premiers moyens de ressort (24) comprennent deux éléments élastiques (38) et dans lequel le bras (22) ou la construction d'essieu (20) sont connectés à la construction d'essieu (20) ou au bras (22), respectivement, entre ces deux éléments élastiques (38), par une bride de fixation (30) prévue sur cette extrémité.

5. Fauteuil roulant (1) selon l'une quelconque des revendications précédentes, dans lequel les premiers moyens de ressort (24) comprennent des éléments en forme de coussin (38).

6. Fauteuil roulant (1) selon l'une quelconque des revendications précédentes, dans lequel les premiers moyens de ressort (24) sont fabriqués en caoutchouc.

7. Fauteuil roulant (1) selon la revendication 6, dans lequel le caoutchouc a une dureté comprise de préférence entre approximativement 50 et 70° Shore.

8. Fauteuil roulant (1) selon l'une quelconque des revendications précédentes, dans lequel au moins les premiers moyens de ressort (24) sont inclinés.

9. Fauteuil roulant (1) selon l'une quelconque des revendications précédentes, dans lequel les seconds moyens de ressort (26) comprennent deux ressorts de torsion reliés aux bras (22) par une première extrémité et au châssis (10) par une seconde extrémité tandis qu'un essieu de torsion de ces ressorts de torsion s'étend essentiellement horizontalement, essentiellement parallèlement à un axe longitudinal de la construction d'essieu (20) rigide.

10. Fauteuil roulant (1) selon la revendication 9, dans lequel une barre de stabilisation transversale (60) est prévue entre le châssis (10) et un des bras (22) pour empêcher la construction d'essieu (20) rigide de pencher par rapport au châssis (10).

11. Fauteuil roulant (1) selon l'une quelconque des revendications précédentes, dans lequel la suspension comprend au moins une butée destinée à limiter la liberté de mouvement maximale de la construction d'essieu (20) rigide, notamment l'écart angulaire maximal de la construction d'essieu (20) autour d'un axe horizontal s'étendant à angle droit par rapport à l'axe longitudinal de la construction d'essieu (20).

12. Fauteuil roulant (1) selon la revendication 11, dans lequel ledit écart angulaire est au moins inférieur à 7° et de préférence inférieur à 5° approximativement.

13. Fauteuil roulant (1) selon l'une quelconque des revendications précédentes, dans lequel les premiers et/ou seconds moyens de ressort (24, 26) comprennent un amortisseur.

14. Fauteuil roulant (1) selon l'une quelconque des revendications précédentes, dans lequel les roues motrices sont les roues arrières (6).
